(19) Europäisches Patentamt
European Patent Office
Office européen des brevets

(11) Publication number: **0 407 347 B1**

(12) **EUROPEAN PATENT SPECIFICATION**

(45) Date of publication of patent specification: **31.08.94**

(51) Int. Cl.$^5$: **A23G 1/00**, A23G 3/00, A23D 9/00

(21) Application number: **90810489.6**

(22) Date of filing: **28.06.90**

(54) **Aqueous foaming composition and method for homogeneously incorporating water into lipophilic materials.**

(30) Priority: **03.07.89 CH 2461/89**

(43) Date of publication of application:
**09.01.91 Bulletin 91/02**

(45) Publication of the grant of the patent:
**31.08.94 Bulletin 94/35**

(84) Designated Contracting States:
**AT BE CH DE ES FR GB GR IT LI LU NL**

(56) References cited:
**EP-A- 0 297 054**
**GB-A- 1 538 750**
**US-A- 3 232 765**
**US-A- 3 809 764**

(73) Proprietor: **BATTELLE MEMORIAL INSTITUTE**
**7 route de Drize**
**CH-1227 Carouge/Genève (CH)**

(72) Inventor: **Giddey, Claude**
**59, route de Chêne**
**CH-1208 Geneva (CH)**
Inventor: **Dove, Georges**
**Ouai du Cheval Blanc 1**
**CH-1227 Carouge (CH)**

(74) Representative: **Dousse, Blasco et al**
**7, route de Drize**
**CH-1227 Carouge/Genève (CH)**



Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

Rank Xerox (UK) Business Services
(3.10/3.09/3.3.3)

## Description

The present invention relates to an aqueous foam forming composition and to a method using the composition after foaming for intimately and uniformly incorporating water into a solid hydrophobic and lipophilic phase, for instance fat containing cosmetics and food products, namely fat ingredients for cosmetic creams, bakery, pastry and confectionery fillers, icing, topping and alike products. An example of a material with such properties is a fatty material containing hydratable sugars and other hydrophilic components, e.g. chocolate, either for chocolate bars or for other confectionery applications. Incorporating water into chocolate can modify some of its physical properties, e.g. its behavior under hot conditions. Hence the invention will be exemplified here with reference to chocolate although it should in no way be limited thereto.

It is well known that when a small quantity of water is uniformly incorporated to chocolate, the resistance of the latter to heat improves and the chocolate has less tendency to soften and become tacky when the temperature exceeds 25-30°C. Chocolate is usually composed of fats (cocoa butter) containing, dispersed therein, non-fat substances such as cocoa solids (cellulose fibers, flavors, theobromine, etc.), sugars, proteins (e.g. milk proteins). In addition, other ingredients may also be present in chocolate, e.g. fruits, almonds, nuts, special flavors, liquors etc.). The main chocolate phase (a continuous lipophilic phase) therefore comprises fats and its melting temperature is generally rather low. Thus when this phase which consists generally of cocoa butter (a mixture of stearyl, oleyl and palmityl tri-glycerides) is exposed to heat, it starts softening at already 28°C and the chocolate looses its strength and body. The mass does no longer "break" cleanly, it collapses and unpleasantly sticks to the wrapper. Furthermore, cocoa butter blooming may eventually appear on the surface of the chocolate upon cooling, such "blooms" unpleasantly looking like molds.

It has been sought to remedy these drawbacks in many fashions, for instance by selecting higher melting fats or, better, by attempting to locally disrupt the continuous fat phase in the chocolate so as to minimize the effects of fat melting on the overall strength loss of the chocolate mass. Such disruption can be obtained by increasing the proportion in the mass of the high melting hydrophilic components, i.e. either by fully embedding the fat within the hydrophilic components, i.e. fully embedding the fat particles in the high melting or infusible components by phase inversion (which means that the fat phase becomes then entirely discontinuous), or by building inside the mass a high melting network structure which traps the fat therein, i.e. like when a soaked sponge retains a liquid in its pores.

A network of this kind can result from the presence in the chocolate of some added water intimately dispersed therein.

For instance, patent CH-A-410.607 discloses a chocolate composition containing hydrophilic substances like dextrose, maltose, invert sugar, fructose, xylose, mannitol, sorbitol, etc. The chocolate articles cast with this composition are subjected to a moist atmosphere whereby they absorb an amount of water. This water absorption increases the volume of the hydrophilic components relative to that of the fat components and improves the heat resistance of the chocolate.

In patents CH-A-399.891 and 489.211 there is disclosed a method of incorporating amorphous sugars to a chocolate composition. These sugars participate to the construction, with water absorption, of a cross-linked structure which prevents the mass from collapsing when the temperature exceeds the melting temperature of the fats used in the chocolate.

Moreover, in patent CH-A-409.603 there is described the direct incorporation of water into chocolate at the manufacturing stage. The amount of water is about 5% by weight of the composition and its addition leads to a rapid thickening of the molten mass (around 30°C), whereby it can no longer be directly cast in the form of chocolate articles by pouring into moulds. The hydrated composition must therefore be ground to a powder and the powder is sintered to forms under pressure. The compositions according to this method are typical inverted phase structures, i.e. structures in which the chocolate fat is substantially totally embedded in a matrix of high melting or non-fusible hydrophilic material. Similar methods are disclosed in CH-A-405.908 and DRP 389 117. In US-A.2,760,867 water is incorporated into chocolate during manufacture by using, in addition, a known emulsifier, e.g. lecithin. According to US-A 4,081,559 a quantity of sugar is added to chocolate such that, when water is ultimately added for providing a heat-resistant chocolate, an aqueous solution of sugar is produced which contains edible fats in emulsion form.

According to another method disclosed in CH-A-519.858, the fats are incorporated in encapsulated form into the chocolate composition, this encapsulation being by means of microcapsules or vesicles of less than 2 mm formed of an edible non-liposoluble membrane; the resulting composition is a heat resistant chocolate.

Document FR-A.2.318.589 describes a technique for intimately incorporating water to the fat phase of a food composition, for example a chocolate composition in which the following operations are performed: in a composition containing 15-35% of an edible fat and at least 40% of sugar by weight, there is emulsified a quantity of water sufficient to make 100%. Then the water is evaporated until separation of the fatty and aqueous phases occurs, so as to achieve an edible composition whose moisture content does not exceed 5% by weight, and in which each individual fat globule is embedded in amorphous sugar (sugar glass). A composition of this kind resists temperatures up to 65 °C.

Japanese document J-60-027.339 discloses the preparation of a chocolate with a high water content; this is achieved by adding the water to the chocolate maintained at a temperature below 60 °C.

According to Japanese document J-59-156.246, a chocolate containing a small quantity of water which is added to improve its structure is made by incorporating thereto hydrated ingredients such as glucose syrup, sucrose, invert sugar, starch, honey, sorbitol, etc. This technique allows incorporating from about 1.5 to 5% of water to the chocolate with no need to make an emulsion.

From the foregoing descriptions of the prior art, it is obvious that many techniques have already been proposed to incorporate water into lipophilic edible products, e.g. chocolate, for the purpose of modifying or improving the physical and physiological properties thereof. However, generally the addition of water by conventional means leads to an extremely rapid thickening of the lipophilic mass and it is practically impossible to very finely and homogeneously distribute this water within the lipophilic mass. This is the reason why conventionally hydrated chocolate had, until now, a rather grainy texture which was considered commercially unattractive. The present inventor has already proposed to cure the difficulty (see US-A-4,446,166) by first emulsifying the water in a solid fatty phase, then grinding this emulsion into a powder of very fine particles and finally dispersing these particles in a mass of molten chocolate. Since the solid fat phase embedding the water has significant thermal inertness, this technique makes it possible to homogeneously distribute the fat-encapsulated water into the liquid chocolate mass before the encapsulating fat melts and the trapped water is released from the particles.

Although this method is very efficient, it has the drawback that the chocolate mass to be treated must be first prepared with less fat than usual since the remaining amount of fat is brought later as a pulverised solid water emulsion; hence this change caused undesirable preliminary manufacturing problems (new formulae, changes of viscosity of the conged chocolate, etc.). Therefore the present inventor searched new means providing even better performance and making it possible to avoid a late addition of fat as in the aforementioned technique. The present inventor reasoned on the principle that in order to homogeneously introduce a small or very small concentration of water in a phase not compatible with water, i.e. a bulk or mass of lipophilic material, one must first "dilute" this water in a relatively large volume of a medium which is compatible with this lipophilic phase (i.e. for instance the solid fat used in the technique of US-A-4,446,166); however, first this medium should not be a fat (for the reasons explained before), and second, the addition of foreign material should be minimized as much as possible for not altering the product final formulation. It was therefore tempting to use a gas as the "diluting medium". Indeed, when a lipophilic phase is intimately mixed with a gas loaded with water, the gas can thereafter be eliminated easily (for instance by degassing) and only the water remains distributed in said lipophilic phase.

A "dilution" of water in a gas can be achieved by means of a foam which may result, for instance, from the whipping of an aqueous solution of a foaming agent in the presence of air or a gas. According to a variant, the gas can be dissolved in the solution under pressure and, upon releasing suddenly the pressure, a foam of the gas in the solution is produced. On the other hand, the film of solution which constitutes the walls of the foam bubbles should preferably be compatible with the material of the lipophilic phase to be hydrated homogeneously; therefore, the foaming agent should preferably have, in addition to the normal hydrophilic groups which work to diminish the surface tension of the water, functions which can dissolve in the lipophilic phase or which, at the least, have definite compatibility with said lipophilic phase. A foaming agent of this kind having simultaneously hydrophilic and lipophilic functional groups is sometimes called an amphipatic compound or surfactant.

A method for embodying the foregoing concept is disclosed in EP-A-297.054 also of the same inventors. It was noted that this method is much advantageous for homogenizing water into a lipophilic phase when one operates with a foaming agent, preferably an amphipatic agent, dissolved in the film of solution that constitutes the bubble-walls. Hence it is possible that the efficiency of the present method and the consequent high degree of homogenization of the water in the lipophilic phase are related to the properties of the foaming agent, one end of which is lipocompatible and causes the water to stay in finely divided form in the lipophilic material. Although the exact mechanism involved here has not been discovered, it is probable that most of the molecules of the foaming agent are arranged in a direction perpendicular to the film making the bubble walls, the hydrophilic functions being dissolved therein and the

lipophilic groups pointing away from the film toward the center of the bubbles. When the foam is mixed with the lipophilic mass, the lipophilic functional groups of the foamer dissolve in the lipophilic phase and, as the bubbles collapse during degassing, the water of the film remains intimately dispersed therein because of the presence of said lipocompatible functional groups of the foamer which stay dissolved in the lipophilic phase. When the lipophilic phase material is normally solid at ambient temperature, it is first melted by heating; then the foam is incorporated therein and the blend is allowed to degas and to cool, whereby it solidifies and the gas escapes.

In the foregoing document, the amphipatic foamers which are convenient in this method include all physiologically acceptable foaming surfactants having, on one hand a hydrophilic functional end (cationic, anionic, or non-ionic) and, on the other hand, a hydrophobic and lipophilic group. These compounds, of which there exists many examples in the prior art on detergents, surfactants and liposomes, include fatty acids derivatives, sulfonates, phosphonates, quaternary ammonium compounds, lipids, phospholipids, sterols, esterified carbohydrates, polypeptides, vegetal and animal proteins with foaming properties, saponins, soaps, etc.

When the phase to be thickened is the fatty phase of chocolate, there are used, naturally, edible surfactants such as soy protein foamers and derivatives (e.g. Hyfoama), partly hydrolyzed casein, partly hydrolyzed gluten, lecithin, albumin, milk proteins, stearyl tartrate, carbohydrate (e.g. sucrose, lactose, glucose, fructose) esters, monoglycerides, di- and triglycerides, and others. Document EP-A-297.054 specifies the requirements for such a surfactant and the aqueous foamer composition containing it, i.e. they should provide a homogeneous foam of density 0.2 or lower, preferably 0.05 to 0.2, comprising bubbles of a size from about 0.1 to 100 µm diameter from a water solution having a concentration of surfactant of about 0.1 to 30% by weight.

In order to be stable, of low density, and suitable for incorporating homogeneously very little quantities of water into lipophilic materials, the foams require a relatively high concentration (up to 10 or 20% by weight) of polypeptide foamers, such as albumin, vegetal protein hydrolyzates or other foaming proteins. Now, it can become desirable for organoleptic or economic reasons, or because of legal requirements of the Food Administrations, to minimize as much as possible the adjunction of substances which are naturally foreign to a food-product, inter alia substances not natural to ordinary chocolate. Consequently, it has been sought to use foams obtained from non-ionic amphiphilic compounds which are normally efficient at very low concentrations, i.e. not exceeding 5%, often below 2% by height of the solution to be foamed. These foams are frothy and bulky but they are short-lived and lack stability when manipulated with the result that the bubbles usually burst when the foam is blended with the lipophilic mass to be hydrated.

Consequently, foaming compositions have been sought containing little or very little foaming agents, the latter still being capable of providing stable foams with bubbles not bursting under manipulation and lasting long enough to be intimately blended, cold or warm, to a hydrophobic phase to be hydrated, e.g. chocolate, before it finally collapses by degassing.

Compositions of such kind are disclosed in claim 1. The method for intimately incorporating the water of the composition to said hydrophobic lipophilic mass includes the steps of melting this phase in case it is not liquid at room temperature, whipping the composition in the presence of air or a gas to convert it into a temporary stable foam and blending intimately this foam with the lipophilic phase so that the water in the foam is homogeneously and intimately distributed therein. Afterwards the gas will escape from the bubbles, the foam will collapse and the water then remains intimately trapped within the structure of the lipophilic mass, thus imparting thereto different and novel properties. When the mass comprises chocolate or consists of chocolate, the latter will become heat-resistant with a structure that remains solid up to relatively high temperatures in the order of 40 to 50°C. Hence, when using from 0.01 to 1 or 2 part by volume of foam by part of lipophilic mass, the quantity of water incorporated therein can be in the range of up to 20% by weight or more. Preferred proportions are about 0.1 to 5% by weight of water incorporated in the lipophilic phase. The bubbles should be durable enough to withstand the effort of blending the foam and the liphophilic material before the gas is released.

The Official Search has elicited the following prior art:

Document US-A-3,809,764 discloses a low-calories foodstuff in the form of a foam ressembling butter, margarine or whipped-cream but without fat. This foodstuff contains 0.3 to 7.5% by weight of foaming agent and 0.2 to 3% of hydrophilic colloid. The foaming agent can be selected from esters of fatty acids and polyols and the hydrophilic colloid can be a hydrophilic gum such as xanthan, gum acacia, carrageenan, gelatin, pectin, starch, CMC and the like. In addition this foodstuff may contain up to 45% by weight of bodying ingredients such as sugar, fructose, egg-whites, inulin, dextran.

US-A-3,322,765 discloses water-in-oil (W/O) chocolate emulsions to be used as foods or in the making of other foods. These W/O emulsions contain fat, cocoa, sugar, emulsifier and water. The fat includes

coconut oil, palm oil, cotton-seed oil, soy-bean oil, cocoa butter and corresponding hydrogenated fats. The emulsifiers include hydrophilic emulsifiers, e.g. lecithins or esters of PEG and fatty acids, and lipophilic emulsifiers such as the esters of glycerol and fatty acids.

GB-A-1,538,750 discloses a method of making heat-resistant chocolate in which water, sugar, cocoa-solids, cocoa-butter, an emulsifier and a gelifying agent are emulsified together, thus providing a temperature resistant chewy food-product. The emulsifier can be lecithin and the gelifier can be gelatin or gum arabic.

The amphipatic surface active foamers convenient in the present invention include esters of fatty acids, preferably saturated with more than 12 carbon atoms, with glycols and polyols, e.g. erythritol, inositol, glycerol (mono-, di- and triglycerides), sorbitol, the polyalkylene-glycols, namely polyethylene-glycol, polyglycerol and polypropylene-glycol. The fatty acids are advantageously selected from palmitic acid, stearic acid and arachidic acid; in the polyalkylene-glycols and polyglycerols, one prefers oligomers with 2 to 12 polyol units so as to achieve an amphiphilic index HLB (HLB means hydrophilic-lipophilic balance) of about 15 to 30. It is reminded in this connection that the higher the HLB, the stronger the hydrophilic character of the surfactant. Appropriate commercial surfactants include the "Tweens"® of food quality (the ATLAS Company) and the "Pluronics"®, provided the foam is sufficiently stable to withstand further manipulations.

Viscosity enhancers, the quantity by weight of which in the foamer composition is preferably about 5 - 30%, include, for example, at least an edible diol or polyol having 2 to 25 hydroxy groups. Viscosity enhancers include glycols, glycerol and other monomeric and oligomeric polyols such as the sugars and corresponding alcohols (i.e. compounds in which the sugar carbonyl is no longer present). All these compounds are physiologically acceptable and of foodstuff quality, namely glucose, fructose, lactose, maltose, sucrose, galactose, sorbitol, maltitol, mannitol and the like. Of course, crude preparations of the foregoing like fruit juices or syrups (corn syrup, glucose syrup) or molasses are also possible. Other viscosity enhancers are the oligomeric polyglycols (polyoxyalkylene glycols) and polyglycerol with from about 2 to 6 monomeric units. Generally the amount of viscosity enhancer is selected (in combination with the other ingredients of the foamer composition) for having viscosities in the range of 5 to 100 mPas (cP), preferably 5 to 30 mPas (cP), before whipping.

As thickeners which are preferably added at concentrations of 0.1 to 2% by weight, one may cite the water soluble edible cross-linked polypeptides and carbohydrates, e.g. pectin, gum guar, xanthan, tragacanth, arabic, dextrin, amylopectin, carrageenan, alginates and the like. Agar is also possible but less preferred because of limited solubility.

When the foregoing viscosity enhancers and thickeners are used, the concentration of the amphipatic foamer can be kept low or very low provided its amphipatic nature is well equilibrated, i.e. its hydrophilic-lipophilic balance (HLB) should preferably be in the range of 15 - 30. As already said, the amphipatic surfactants which fall in this class are preferably the esters of fatty acids (preferably saturated) having more than about 12 carbon atoms, e.g. palmitic, stearic and arachidic acids, with glycols and polyols, for instance erythritol, sorbitol, inositol, glycerol (mono-, di-, tri- or polyfunctional esters), polyglycerol and polyoxyalkylene glycols like polyethylene glycol or polypropylene glycol. The esters including 2 to 12 units of glycol or glycerol are advantageous to achieve a HLB in the desired range.

The gases to be used for preparing the present foam can be any non-toxic and physiologically acceptable gases including air, nitrogen, carbon dioxide, $N_2O$, rare gases and the like. Vapors of volatile compounds including innocuous hydrocarbons and halocarbons can also be used provided they have no odor or after taste (or at least leaving no odor in the product after degassing).

The foamer composition can also comprise further ingredients (dissolved or dispersed therein), for instance hygroscopic carbohydrates which can retard the diffusion of water in the lipophilic material, sweeteners, flavors, acidifiers like gluconic, citric or malic acid, spirits, seasoners, spices, dyestuffs, vitamins, stabilizers, antioxidants and the like. The use of the foamer composition according to the invention is therefore particularly useful since many additives are ill-compatible with fats and can be incorporated very homogeneously in the lipophilic products when in the form of a foam. In addition to chocolate, this particularly applies to a full range of other lipophilic materials including cosmetics (lanolin creams and ointments) and food products to which hydrophilic additives are incorporated in the form of aqueous solutions.

Additives include biocompatible and edible dyes (cochenilla carmin, vegetable dyes, elder-berry blue, etc.), vitamin C, $B_1$, panthotenic acid, benzoate stabilizers and the like. The lipophilic products in which it may be desirable to incorporate the foregoing additives include edible vegetal and animal fats, lard, peanut butter, tallow and pastry or confectionery formulations such as fillers or icing and topping mixtures.

Hence, according to the method of the invention, one can incorporate into fats hydrosoluble substances which are normally not compatible with said fats. For doing this, the hydrophilic substances are dissolved in the solution to be foamed, then the solution is beaten to a foam and the latter is intimately incorporated to the fat (in the liquid state), as indicated before in the case of chocolate. Then, after cooling, the lipophilic phase (the fat for instance) sets to a solid.

For embodying the method of invention, the foam is admixed with the lipophilic material and thoroughly blended therewith. The lipophilic material can either be in solid fluidized powder form or it can be heated and brought to a fluid (liquid) state by melting. Blending can be performed by conventional means (kneader, blender, agitated vessel) provided the blending motion is smooth enough not to destroy the foam bubbles before the foam is intimately dispersed in the lipophilic phase. A typical case is that of hydrating chocolate, the detailed steps of which are disclosed now.

A composition with lipophilic character, for instance a mass of chocolate, is first prepared and brought to the liquid state by usual means and using usual ingredients. The mass can optionally be tempered, but this is not a must. Tempering means that cocoa butter crystallization "germs" (crystallites) are generated within the liquid chocolate mass containing molten cocoa butter. This is accomplished by temporarily cooling the molten mass, while subjecting it to a kneading effect, from about 35 °C where it is liquid to 25-27 °C; then it is brought back to 29-31 °C. In an embodiment of the invention, the mass is tempered and, once again at 29-31 °C, there is added thereto 0.2 to 1 part by volume of the foregoing aqueous solution foam; the mixture is stirred and kneaded for a few minutes to ensure homogeneous dispersion whereby it remains perfectly fluid for some time, then it is further processed while it is still fluid, for instance it is cast into moulds. The amount of foam to be added is calculated to correspond, depending on its concentration, to the incorporation of about 0.5 to 2% by weight of water to the chocolate. Generally, the gas or the air of the foam readily escapes afterwards from the liquid lipophilic mass. However, the trapped air or gas can be eliminated more quickly from the cast mixture by subjecting it to reduced pressure or by pressing it mechanically to produce a squeezing effect. Preferably, this degassing operation is carried out when the mass is still liquid or fluid so as to speed up the gas evolution. Then the mass is usually allowed to cool, for instance between 10 or 20 °C, whereby it sets and solidifies. However, in an embodiment the mass can be cooled to a highly viscous or thermal plastic state before degassing and then subjected to sudden reduced pressure which leads to expansion. This expanded structure is preserved after complete solidification and the presence of residual air or gas therein does not impede the homogeneous distribution of the water into the mass and the providing thereto of unusual heat resistance properties. The degree of homogeneous distribution of the water in the chocolate can still be further improved by storing it for several hours, after solidification by cooling, e.g. 12-48 hrs, at 27 °C.

In addition to the heat resistance given to the chocolate, the method of the invention also markedly reduces the tendency to "fat blooming" after heat exposure during storage followed by cooling. Usually, this phenomenon appears as unpleasant whitish rash on the surface of the chocolate due to the exudation of cocoa butter and eventual recrystallization.

The foam to be used in the present invention can be of any kind within the foregoing property limits. It is prepared by usual means, for instance with an industrial high speed mixer or by whipping with a whip or in an industrial whipping apparatus.

Other ingredients than the required foaming agent can be incorporated to the solution used to make the foam. Among useful additional ingredients (to be used dissolved or as suspensions), the following can be recited: gums and carbohydrates which can retard (because of their hydrophilic character) the diffusion of the water of the foam into the lipophilic mass; sweetening agents, flavors, hydrophilic compounds (glycerol, propylene glycol, sorbitol, etc.), gluconic acid, liquors, etc.

The amount of foaming agent (or agents) in the foamer composition should not exceed 5% by weight, preferably below, i.e. not above 2%. It should however be noted that a relation exists between this concentration and the nature of the amphiphatic agent. For instance with the animal and vegetal proteins disclosed in EP-A-297.054, the concentration was relatively high, i.e., on the high side of the range, say from about 5 to 30% by weight. With other edible amphipatic surfactants according to the present invention, for instance non-ionic surface active compounds, the concentration can be much lower, say from about 0.1 to 5%. This is an advantage when it is desired that the amount of surfactant in the final product be minimized as much as possible, for instance because of requirements issued by the Food & Drug Administration. However, the foams obtained with low or very low concentrations of non-ionic foamers alone are not very durable and may collapse before mixing with the lipophilic phase is complete. This is the reason why water soluble viscosity enhancers and thickeners are added for reinforcing the stability and durability of such foams.

The following examples illustrate the invention in more detail.

Example 1

An aqueous foamer composition was prepared by dissolving the following ingredients in water between 30 and 60 °C;

| Ingredients | % by weight |
|---|---|
| Water | 78 |
| Sucrose (crystals) | 20.4 |
| Pectin (from apples) | 0.8 |
| Tween®-65 (a polyoxy-ethylene-sorbitan tristearate) | 0,8 |

The above composition (viscosity 15 mPas (cP) at 20-22°, Brookfield) was whipped under air just before use to provide a foam of density 0.05-0.1; 3.5% (v/v) of water.

In another container provided with a stirrer-kneader was placed 1 kg of ordinary commercial milk-chocolate, in liquid form as taken from a conche apparatus. In the present example, the milk-chocolate essentially included the following ingredients by weight: fats 32% (cocoa butter 26%, milk-fats 6%); non-fatty milk solids 11%; non-fat solids and other components of cocoa 29%; sugars 27%; residual moisture 0.4-0.6%. The chocolate is conched at a temperature of 55 °C and is free flowing at this temperature. The one kilogram sample of chocolate was first tempered, i.e. it was temporarily cooled to 26 °C which induced the formation of cocoa butter crystallites, then it was reheated to 29.5 °C. Under these conditions, the mass is still free flowing and, under agitation, 0.5-0.6 liter of the aforementioned foam was added thereto in a matter of 15-30 sec, after which stirring was continued for a few minutes, e.g. 5-10 min.

Then, without waiting longer, the homogeneous mass was cast into moulds and the moulds were allowed to cool slowly according to usual technique. After complete solidification, the chocolate was removed from the moulds; its aspect was undistinguishable from control chocolate prepared from the same batch but without the foregoing water addition treatment.

The hydrated test chocolate samples were cured by standing for 48 hrs at 27 °C; then the cured samples and the control chocolate were submitted to a group of experienced tasters who were unable to discover substantial organoleptic differences between the two kinds of chocolate.

Several samples of the test chocolate prepared and cast as described above, and controls having the same composition but for the water of hydration, were heated for 2 hrs at 37 °C in a heated enclosure. Then the samples and controls were subjected to a hardness "penetration" test. In this test a device with a vertically sliding needle is placed on the chocolate surface and the force necessary to drive the needle into the chocolate to a given depth (namely 3 mm in the test) is measured. For the control samples the force was 6 g whereas in the test sample the force was 58 g (average).

In another test samples of test chocolate and controls were held at 50 °C overnight in a heated enclosure. The test samples were not altered by the treatment, for instance under stress the bars broke cleanly as if the temperature was not over 20-25 °C, and the broken surface was neat and dry. In contrast, the controls had become viscous and collapsed completely.

Example 2

A series of foamer compositions were prepared from various ingredients summarized in Table 1 hereafter. The preparation technique was the same as that in the foregoing example. The several compositions (1c to 5b) were foamed in air as described previously. Parameters pertaining to compositions and foams (viscosity, pH, densities) are also recorded in Table 1 in which the following designations are used:

| | |
|---|---|
| Tween®-65 foamer = | polyoxyethylene-sorbitan tristearate |
| Tween®-60 foamer = | polyoxyethylene-sorbitan monostearate |
| Dimodan®-PMF-foamer = | fatty acid monoglyceride (Grindsted, Denmark) |
| Pectin L thickener = | slow pectin |
| Satialgil® 14-CET = | alginate (SATIA, France) |
| Lygomme®- J = | carrageenan (SATIA) |

The quantities of the ingredients listed in Table 1 are in % by weight (water constitutes the remainder to make 100%); composition viscosities are in cP and foam density in g/cm$^3$.

TABLE 1

| Experiment No | 1c | 1d | 1e | 2a | 2b | 2c | 2d | 2e |
|---|---|---|---|---|---|---|---|---|
| **Ingredients** | | | | | | | | |
| Tween-65 | 0.7 | 0.7 | 0.7 | 0.7 | 0.7 | 0.7 | 0.7 | 0.7 |
| Sucrose (cryst) | -- | 11 | 20 | -- | -- | 20 | 20 | -- |
| Pectinated sugar | 20 | 9 | -- | -- | -- | -- | -- | -- |
| Glucose | -- | -- | -- | 20 | -- | -- | -- | -- |
| Invert sugar | -- | -- | -- | -- | 28.6 | -- | -- | -- |
| Cane sugar | -- | -- | -- | -- | -- | -- | -- | 20 |
| Pectin R | 0.7 | 0.7 | 0.35 | 0.7 | 0.7 | 0.7 | -- | 0.7 |
| Pectin L | -- | -- | -- | -- | -- | -- | 0.7 | -- |
| Density | 0.13 | 0.2 | 0.14 | 0.14 | 0.16 | 0.13 | 0.15 | 0.12 |
| Viscosity | 12 | 10 | 17 | -- | 22 | 15 | -- | 13 |
| pH | 4.6 | -- | -- | -- | -- | -- | -- | -- |

TABLE 1 (cont.)

| Experiment No | 3a | 3b | 3c | 3d | 3e | 4a | 4b | 4f | 5a | 5b |
|---|---|---|---|---|---|---|---|---|---|---|
| **Ingredients** | | | | | | | | | | |
| Tween-65 | -- | -- | 0.7 | 0.7 | 0.7 | 0.7 | 0.7 | 0.7 | 0.7 | 0.7 |
| Tween-60 | 0.7 | -- | -- | -- | -- | -- | -- | -- | -- | -- |
| Dimodan-PMF | -- | 0.7 | -- | -- | -- | -- | -- | -- | -- | -- |
| Maltodextrin MD-65 | -- | -- | 20 | -- | -- | -- | -- | -- | -- | -- |
| Sucrose | 20 | 20 | -- | -- | 15 | 20 | 20 | 20 | 20 | 20 |
| Xylitol | -- | -- | -- | 20 | -- | -- | -- | -- | -- | -- |
| Glycerol | -- | -- | -- | -- | 5 | -- | -- | -- | -- | -- |
| Pectin R | 0.7 | 0.7 | 0.7 | 0.7 | 0.7 | -- | -- | -- | 0.7 | 1.2 |
| Satialgil 14-CET | -- | -- | -- | -- | -- | 0.7 | 0.3 | -- | -- | -- |
| Lygomme-J | -- | -- | -- | -- | -- | -- | -- | 0.25 | -- | -- |
| Density | 0.15 | 0.2 | 0.2 | 0.12 | 0.13 | 0.16 | 0.19 | 0.2 | 0.16 | 0.2 |
| Viscosity | -- | -- | -- | 15 | 14 | -- | -- | 5 | -- | -- |
| pH | 4.6 | -- | -- | -- | -- | 7 | 6.9 | -- | -- | -- |

A quantity of 680 g of milk-chocolate (provided by a renown US manufacturer) was put into a stirred vessel like disclosed in example 1 in admixture with 0.3% by weight of lecithin and brought to the molten state by raising the temperature to 50 °C . The texture of the chocolate was rather grainy (milling grade > 50 µm). The molten mass was tempered as described before (35° - 25.2° - 31.5 °C), then there was added and thoroughly mixed 13.2 g of the foam under 2e in Table 1; blending time was about 4 - 6 min. The viscosity of the melt increased very slightly after addition of the foam, hence casting into moulds was performed under optimal conditions.

After cooling and removing from the moulds, the chocolate bars and blocks were stored for 40 hours at 27 °C to effect maturation, after which they were subjected to the test of resistance to heat as described in previous examples. Very significant results were noted although less marked than in example 2; this difference probably results from a smaller proportion of hydrophilic particles within the fat phase due to less complete milling of the chocolate.

## Example 3

680 g of Meiji grade-4 milk chocolate were used; this chocolate comprises the following ingredients in % by weight;

| | |
|---|---|
| Cocoa butter | 8% |
| Other fats compatible with cocoa butter | 8.5% |
| Cocoa liquor | 18% |
| Sugar (crystallized) | 35% |
| Lactose | 8% |
| Dried milk powder | 22% |
| Lecithin | 0.4% |

This chocolate which has a very finely milled texture (<12 µm) was brought to the molten state at 50°C and tempered (temperatures 50° - 30° - 25.5° - 31.5°C), then 13.2 g of foam 2e (Table 1) were added and blended thoroughly.

Further operations were then exactly as in the previous examples, i.e. moulding, solidifying, maturing and testing. In this case, the effects of hydration on the resistance to temperature elevation were excellent; the improvements expressed in terms of penetration decrease of the needle test are about 10 fold relative to controls (same chocolate not hydrated).

Thereafter, a series of experiments using the same chocolate grade were performed using the same quantity of added water (1.5% by weight) and the various foams listed in Table 1. All experiments were positive, the best results (in terms of heat resistance) being observed when using the foams indexed under Nos 1c, 2c, 3a, 3d, 3e, and 5a.

## Example 4

Hydration of a lipophilic filler for pies and tarts.

In this case the problem is to finely and homogeneously distribute hydrophilic lipophobic constituents in aqueous solution into a lipophilic material.

A lipophilic product to be used as filler for cakes and pies was prepared by blending at 35 - 40°C (this temperature is slightly above the melting of the fats) in a mixer-kneader 320 g of "Biscuitine" (a vegetal shortening), 220 g of powdered dried milk solids and 460 g of sucrose (from sugar beets). The mass was thoroughly kneaded for 10 - 15 min until it was fully homogeneous.

An aqueous composition was prepared containing 32 g of water, 6 g of sucrose, 0.4 g of pectin, 40 mg of ascorbic acid, 60 mg of Betanine (a natural elder-berry dye) and 0.3 g of Tween®-65. The composition had a viscosity about 18 mPas (cP). This composition was beaten under air to give a foam of density about 0.1.

The foam was slowly incorporated to the kneaded lipophilic mass (35 - 40°C) while avoiding to break the foam under blending until a well homogeneous mixture was achieved (slow blending for 4 - 5 min). Then the blend was allowed to cool under rest while degassing and solidification occurred. A colored filler mass was therefore obtained with very fine grained texture in which the hydrophilic additives are intimately distributed although they are naturally not compatible with the fats of the lipophilic phase.

This product was successfully used for making pastry and confectionery articles.

If in the foregoing example sucrose is replaced in the foamer composition by other carbohydrates, namely glucose or lactose or by sweetening polyalcohols (e.g. sorbitol), similar results are experienced.

If in the foregoing example air for beating is replaced by other innocuous gases, e.g. $N_2O$, $CO_2$, $N_2$ or noble gases, similar results are experienced.

## Example 5

Reagglomeration of praline dust.

Praline is normally manufactured by baking a mixture of sweet almonds and sugar; then the product is crushed in a mill to provide a coarse powder which is sieved to retain the particles of 1 - 2 mm. This powder is much appreciated in bakery and confectionery for enrobing, icing, topping and the like.

Unfortunately a lot of praline dust is formed in milling and sieving which cannot be readily used because it is too fine. Hence usually praline dust is lost unless it can be reagglomerated with water.

The problem here is to rehydrate homogeneously a lipophilic material consisting of praline dust. If praline dust can be reagglomerated to larger particles, it can be reused in confectionery like normal praline powder. But homogeneously adding water to praline dust is extremely difficult as it repels water vigorously because of its lipophilic properties. Consequently, one cannot homogeneously incorporate water to praline dust by usual means. The present invention solves elegantly this problem.

To 500 g of praline dust (approximate composition 20% fats, 15% of proteins, 50% of sugars, the remainder being minerals and fibers) was added by blending a foam prepared as follows: a solution was made by dissolving 4.5 g of cane sugar, 0.2 g of Tween®-65 and 0.2 g of pectin (from apples) in 22 g of water. This solution was foamed by whipping in air.

After a few minutes of blending, the foam collapsed and disappeared but the dust was converted to a slightly moist free-flowing coarse powder of reagglomerated praline dust.

The powder was further granulated in a granulator-calibrator apparatus (grains of 1 - 2 mm) and it was heated for a few seconds in an air stream at 150 °C (fluidized bed) in order to effect full drying. The powder was thereafter successfully used for making pastry and confectionery products exactly as with original praline powder.

In a control experiment, praline dust was moistened by spraying with a fine water mist; the rehydration attempt was unsuccessful as a tacky, pasty mass resulted which could not be worked further.

Example 6

Heat conditioning a fat composition for pastry and confectionery.

A lipophilic mass was prepared by blending at 45-50 °C the following ingredients (% by weight) :

| | |
|---|---|
| Whole milk powder | 18 |
| Skim milk powder | 7 |
| Sucrose (finely milled) | 37.5 |
| Lactose | 8 |
| Compound fat (SAIS-555)* | 29.5 |

* From the SAIS Company, Switzerland

A foam was prepared by beating in air a solution of water (80 g), fructose (18 g), pectin (1.1 g) and Tween®-65 (0.9 g) until a foam density of about 0.05 - 0.06 was attained.

Then to 1 kg of the molten foregoing lipophilic mass at 50 °C and under slow stirring were added 50 g of the foam. The mass was allowed to degas after which it was used as cake-icing or filling, and for coating biscuits. Controls were prepared using the same lipophilic composition but not treated with the foam. After hardening and standing for a few hours at room temperature, the product was found to resist melting under overheated storage conditions much better than the controls.

Example 7

Using the technique of Example 1, a stable foam of density 0.16 was prepared by whipping in air the following composition by weight:

Cane sugar 30%; Tween®-60 1.4%; pectin (slow) 0.7%; water 67.9%.

This foam was added to samples of molten chocolate using the technique disclosed in Example 1 or 2, the amount of foam being that required to bring about 1.5% by weight of water to the chocolate mass. Then the hydrated molten chocolate was cast into moulds, cooled, removed from the moulds and the castings were cured as described previously at 27° for 24-48 hrs.

The samples were thereafter subjected to various heat-resistance tests according to the following standards:

Finger test : In this test, one exerts pressure with a finger on the heated chocolate tablet. A score of 5 (best mark) corresponds to the result (negligible deformation) obtained with a sample of "Cailler" chocolate (manufactured by NESTLE) modified by incorporating 1.5% by weight of water according to the invention. Scores ranging 4 to 1 indicate less resistance to heat (visible deformations of progressive extent); the mark 2 indicates poor resistance to heat; the mark 3 is acceptable or borderline.

Crater test : In this test, a steel ball (12 mm of diameter, mass 142 g) is dropped on the chocolate surface from a given height (70 mm) and the size of the crater formed upon impact is measured (diameter of the inprint). In some cases the temperature of the tested sample was 40 °C, but generally this was of 35 °C.

Table II below summarizes the results of the tests on a variety of chocolates manufactured all over the world after being hydrated (1.5% by weight added water) according to the invention. In the Table, the chocolates are identified by manufacturer's name and type of chocolate when specified. In all cases the scores measured on controls (i.e. the same chocolates as purchased with no water added) were much

below that measured with the corresponding hydrated samples (finger tests below 2 and crater tests of 12 which indicate full penetration of the steel ball). There is also indicated in Table II the flow pattern (fluidity or viscosity) of the chocolate melt after incorporation of the foam formulation. In case this melt was too viscous for casting, this can be settled (fluidity increased) by adding a fluidizing agent (0.1-1% by weight), e.g. lecithin or Admul® (Quest International).

TABLE II

| Exper. No. | Chocolate | Flow (moulding) | Finger test (35 ° C) | Crater test (35 ° C) |
|---|---|---|---|---|
| 115d | YORKIE | viscous | 3 | -- |
| 116a | NESTLE (US) | medium | 3 | -- |
| 111a | CAILLER (SW) | medium | 4 | 9 |
| 110c | CAILLER (SW) | medium | 4 | 10 |
| 116b | TOBLER | normal | 3 | -- |
| 116c | GALAXY | viscous | 3 + | -- |
| 116d | MARABOU | normal | 2 | 10 (32 ° C) |
| 117a | ICE CUBES | normal | 0 | -- |
| 117b | SUCHARD (Milka) | medium | 3 + | -- |
| 118a | LUDEN'S 5th Avenue | viscous | 3 | -- |
| 125c | MOIRS | viscous | 4 | 10 |
| 125d | LOWNEY | viscous | 2 | -- |
| 126a | DAIRY | viscous | 3 + | 9 |
| 126b | JERSEY | viscous | 3 | 11 |
| 126c | AERO | viscous | 1 | -- |
| 126d | KOREANS | viscous | 2 | 11 |
| 127a | ALPEN (diabete) | normal | 3 | 11 |
| 133a | MEIJI M (Lux) | normal | 4 | 10 (34 ° C) |
| M.2 | MEIJI imported from Japan | fluid | 5 | 7 |
| 133b | LOTTE (Cream) | normal | 2 | over 12 |
| 133c | LINDT (Milk) | normal | 5 | 8 - 9 (34 ° C-40 ° C) |

## Claims

1. An aqueous composition comprising no more than 5% by weight, preferably no more than 2%, of at least one physiologically acceptable amphipatic foaming agent having at least a hydrophilic group and a hydrophobic lipophilic group, this composition being capable of forming, upon beating or whipping in the presence of a gas or air, a foam of density 0.2 or less consisting of fine air or gas bubbles sufficiently stable not to break when blending the foam with pulverized or molten lipophilic material so that the water in the foam becomes intimately and homogeneously distributed in said lipophilic material before degassing occurs, characterized in that it also comprises 5-30% b.w. of at least one hydrosoluble viscosity enhancer, i.e. a polyol of edible quality having from 2 to 25 hydroxy groups and 0.05 to 2% of a thickener constituted by at least a cross-linked polysaccharide, and in that its viscosity at room temperature is from 5 to 100 mPas (cP).

2. The composition of Claim 1, in which the foaming agent is selected from the esters of saturated fatty acids of at least 12 carbon atoms with glycols and polyols.

3. The composition of Claim 2, in which the glycols and polyols are selected from essentially erythritol, inositol, glycerol, oligomeric polyglycerol with up to 12 glycerol units, sorbitol, polyalkylene glycols, polyethylene glycol, polypropylene glycol and mixtures thereof.

4. The composition of Claim 2, comprising 0.05-2% by weight of amphipatic foaming agent whose hydrophilic-lipophobic balance HLB is about 15 to 30.

5. The composition of Claim 1, in which the viscosity enhancing agent is selected from the group consisting of glycols, polyglycols, glycerol, polyglycerol, mono- and oligosaccharides, polyalcohols and

polyols resulting from reduction of mono- and oligosaccharides.

6. The composition of Claim 4, in which oligosaccharides and polyols are selected from the group consisting of glucose, fructose, lactose, maltose, sucrose, invert sugar, cane sugar, galactose, sorbitol, maltitol, mannitol, inositol, pentaery-thritol, corn syrup and molasses.

7. The composition of Claim 1, comprising 0.05 to 2% of a carbohydrate or protein food thickener selected from pectin, amylopectin, gum guar, tragacanth, dextrin, gelatin, arabic and carageenan and other food thickeners.

8. A method for intimately and homogeneously incorporating water into lipophilic materials containing physiologically acceptable fats, comprising the steps of thoroughly blending said material brought to a fluidized state with a foam consisting of fine bubbles of air or of a physiologically acceptable gas dispersed in the composition of Claim 1, then removing the air or gas from the blend.

9. The method of Claim 8, in which the foam is obtained by whipping an aqueous solution of a physiologically acceptable foaming agent in the presence of air or a gas, or by pressure-dissolving said air or gas in the solution and releasing suddenly the pressure, said foamers having sufficient foaming capacity to provide aqueous foams of density 0.2 or less.

10. The method of Claim 9, in which said foaming agent is an amphipatic compound of HLB from 15 to 30 comprising at least a hydrophilic group and a hydrophobic lipophilic group, and in which the lipophilic group contacts the lipophilic material, thus enabling the water in the foam to become intimately mixed with the lipophilic material when the foam progressively dissolves therein and the gas escapes therefrom.

11. The method of Claim 8, in which the lipophilic material contains an edible fat and at least a sugar in the form of a hydratable mono- or oligosaccharide.

12. The method of Claims 11, in which said sugar is sucrose, lactose or glucose.

13. The method of Claim 12, in which the lipophilic material is selected from the group consisting of chocolate, chocolate replacement products, cosmetic creams, confectionery fillings, topping compositions, cake icing, praline and the like.

14. The method of Claim 13, wherein the foam density is from about 0.05 to 0.2 and its moisture content from about 1 to 20% by volume, and there is added about 0.2 to 1 part by volume of this foam for one part of lipophilic material.

15. The method of Claims 9, in which the concentration of the foaming agent in the aqueous solution is 0.05 to 2% by weight.

16. The method of Claim 9, in which the blending is brought about between from about 25 to 50 °C.

17. The method of Claim 9, which results in raising the melting point of chocolate and increasing its resistance to fat blooming.

18. The method of Claim 13, in which the chocolate is subjected to tempering before adding the foam therein.

19. The method of Claim 9, in which the gas is selected from the group consisting of $N_2O$, $CO_2$, $N_2$, noble gases and mixtures thereof.

20. The method of Claim 13, in which the blend of chocolate and foam is allowed to cool until it solidifies, then the solid chocolate is stored for a period of time at 27 °C, whereby the distribution of the water in the solid is improved.

**21.** A method for intimately and homogeneously incorporating water or a water solution of water-soluble substances into solid lipophilic material containing physiologically acceptable fats, comprising the steps of:

1) whipping or beating in the presence of air or a physiologically acceptable gas an aqueous foamer composition comprising at least one physiologically acceptable amphipatic foaming agent having at least a hydrophilic group and a hydrophobic lipophilic group to provide a foam of density 0.2 or less consisting of fine air or gas bubbles of sufficient durability to withstand blending of the foam with the lipophilic material without breaking;

2) fluidizing the lipophilic material by heating and melting, or by pulverizing it, and blending it thoroughly with the foam under conditions sufficiently mild not to break the bubbles of the foam;

3) degassing the blend and allowing it to solidify by cooling, whereby said lipophilic material containing said water and water-soluble substances intimately distributed therein is obtained, characterized in that the foamer composition also comprises 5-30 w% of at least a viscosity enhancer and 0,05-2 w% of a thickener and in that its viscosity before foaming is 5 to 100 mPas (cP).

**22.** The method of Claim 21, in which said aqueous foamer composition comprises an edible viscosity enhancer consisting of a di- or polyol with from 2 to 25 hydroxy groups and a food thickener consisting of a cross-linked polypeptide or polysaccharide, the viscosity of said composition before foaming not being less than 5 cP.

**23.** The method of Claim 22, in which said amphipatic foamer is non-ionic and consists of esters of fatty acids and glycols or polyglycols with a hydrophilic-lipophilic balance of about 15 to 30.

**24.** The method of Claim 22, in which said aqueous foamer composition comprises, by weight, 0.05 to 2% of foamer, 5 - 30% of viscosity enhancer and 0.1 to 2% of thickener.

**25.** The method of Claim 22, in which said amphipatic foamer is one or more fatty acid esters of saturated fatty acids of 12 or more carbon atoms with glycols and polyols selected from the group consisting essentially of erythritol, inositol, glycerol, oligomeric polyglycerol with up to 12 glycerol units, sorbitol, polysorbitol, polyalkylene glycols, polyoxyethylene glycol and polypropylene glycol.

**26.** The method of Claim 22, in which said viscosity enhancer is one or more compounds selected from the group consisting of glycols, polyglycols, polyoxyalkylene glycols, glycerol, polyglycerol, mono-, di- and oligosaccharides, and corresponding non-sugar polyols.

**27.** The method of Claims 22, in which said viscosity enhancer is one or more compounds selected from the group consisting of glucose, fructose, lactose, maltose, sucrose, invert sugar, cane sugar, galactose, sorbitol, maltitol, mannitol, inositol, pentaerythritol, corn syrup and molasses.

**28.** The method of Claim 22, in which the food thickener is selected from the group consisting of pectin, amylopectin, gum guar, tragacanth, arabic, xanthan, dextrin, maltodextrin, gelatin and carrageenan.

**Patentansprüche**

**1.** Wäßrige Zusammensetzung umfassend nicht mehr als 5 Gew.%, vorzugsweise nicht mehr als 2 % mindestens einen physiologisch akzeptablen amphipatischen Schaumbildner, der mindestens eine hydrophile Gruppe und eine hydrophobe lipophile Gruppe hat, wobei diese Zusammensetzung imstande ist, beim Schlagen in Gegenwart eines Gases oder Luft einen Schaum mit einer Dichte von 0,2 oder weniger zu bilden, der aus feinen Luft- oder Gasblasen besteht, welche stabil genug sind, um nicht zu platzen, wenn der Schaum mit pulverisiertem oder geschmolzenem lipophilen Material vermischt wird, so daß das Wasser im Schaum innig und gleichmäßig in dem lipophilen Material verteilt wird bevor eine Entgasung eintritt,

dadurch **gekennzeichnet,** daß

sie auch 5 bis 30 Gew.% mindestens ein wasserlösliches Mittel zur Viskositätserhöhung, das ist ein Polyol mit Speisequalität, das 2 bis 25 Hydroxygruppen hat; und 0,05 bis 2 % ein Verdickungsmittel, das aus mindestens einem vernetzten Polysaccharid besteht, enthält; und daß ihre Viskosität bei Raumtemperatur von 5 bis 100 mPas (cP) ist.

2. Zusammensetzung nach Anspruch 1, bei der der Schaumbildner aus den Estern von gesättigten Fettsäuren, die mindestens 12 Kohlenstoffatome haben, mit Glykolen und Polyolen ausgewählt ist.

3. Zusammensetzung nach Anspruch 2, bei der die Glykole und Polyole im wesentlichen aus Erythrit, Inosit, Glycerin, oligomeres Polyglycerin mit bis zu 12 Glycerineinheiten, Sorbit, Polyalkylenglykolen, Polyethylenglykol, Polypropylenglykol und Mischungen der genannten ausgewählt sind.

4. Zusammensetzung nach Anspruch 2, die 0,05 bis 2 Gew.% amphipatischen Schaumbildner, dessen Wert des hydrophillipophilen Gleichgewichts etwa 15 bis 30 ist, enthält.

5. Zusammensetzung nach Anspruch 1, bei der das Mittel zur Viskositätserhöhung aus der aus Glykolen, Polyglykolen, Glycerin, Polyglycerin, Mono- und Oligosacchariden, Polyalkoholen und Polyolen, die aus der Reduktion von Mono- und Oligosacchariden resultieren, bestehenden Gruppe ausgewählt ist.

6. Zusammensetzung nach Anspruch 4, bei der Oligosaccharide und Polyole aus der aus Glucose, Fructose, Lactose, Maltose, Maltin, Saccharose, Invertzucker, Rohrzucker, Galaktose, Sorbit, Mannit, Inosit, Pentaerythrit, Stärkezuckersirup aus Mais, Melasse bestehenden Gruppe ausgewählt sind.

7. Zusammensetzung nach Anspruch 1, die 0,05 bis 2 % eines Kohlenhydrat- oder Protein-Lebensmittelverdickungsmittels, ausgewählt aus Pektin, Amylopektin, Guargummi, Tragant, Dextrin, Gelatine, Araban, Carrageen und anderen Lebensmittelverdickungsmittel, enthält.

8. Verfahren zum innigen und homogenen Einarbeiten von Wasser in lipophile Materialien, die physiologisch akzeptable Fette enthalten, umfassend die Schritte eines kräftigen Vermischens dieses Materials, das in einen fluidisierten Zustand übergeführt wurde, mit einem Schaum, der aus feinen Blasen aus Luft oder einem physiologisch akzeptablen Gas, welche(s) in der Zusammensetzung nach Anspruch 1 dispergiert ist, besteht; sowie des anschließenden Entfernens der Luft oder des Gases aus der Mischung.

9. Verfahren nach Anspruch 8, bei dem der Schaum erhalten wird, indem eine wäßrige Lösung eines physiologisch akzeptablen Schaumbildners in Gegenwart von Luft oder eines Gases geschlagen wird, oder indem die Luft oder das Gas unter Druck in der Lösung gelöst werden und der Druck plötzlich weggenommen wird; wobei die Schaumbildner ein genügendes Schäumungsvermögen haben, um wäßrige Schäume mit einer Dichte von weniger als 0,2 bereitzustellen.

10. Verfahren nach Anspruch 9, bei dem der Schaumbildner eine amphipatische Verbindung ist, die einen HLB-Wert von 15 bis 30 hat und die mindestens eine hydrophile Gruppe und eine hydrophobe lipophile Gruppe hat, und in welchem die lipophile Gruppe mit dem lipophilen Material in Kontakt tritt, wodurch verhindert wird, daß das Wasser im Schaum zu innig mit dem lipophilen Material vermischt wird, wenn der Schaum sich allmählich darin auflöst und das Gas daraus entweicht.

11. Verfahren nach Anspruch 8, bei dem das lipophile Material ein eßbares Fett und mindestens einen Zucker in Form eines hydratisierbaren Mono- oder Oligosacchardis enthält.

12. Verfahren nach Anspruch 11, bei dem der Zucker Saccharose, Lactose oder Glucose ist.

13. Verfahren nach Anspruch 12, bei dem das lipophile Material aus der aus Schokolade, Schokolade-Ersatzprodukten, kosmetischen Cremes, Backfüllungen, Überzugszusammensetzungen, Kuchen-Zukkerglasur, Praline und dergl. bestehenden Gruppe ausgewählt ist.

14. Verfahren nach Anspruch 13, bei dem die Schaumdichte von etwa 0,05 bis 0,2 ist und sein Feuchtigkeitsgehalt von etwa 1 bis 20 Vol.% ist, und bei dem etwa 0,2 bis 1 Volumenteil dieses Schaums pro Teil lipophiles Material zugesetzt wird.

15. Verfahren nach Anspruch 9, bei dem die Konzentration des Schaumbildners in der wäßrigen Lösung 0,05 bis 2 Gew.% ist.

**16.** Verfahren nach Anspruch 9, bei dem die Mischung auf eine Temperatur zwischen 25 und 50°C gebracht wird.

**17.** Verfahren nach Anspruch 9, welches zu einer Erhöhung des Schmelzpunktes von Schokolade und zu einer Erhöhung ihrer Beständigkeit gegen die Bildung von Fettreif führt.

**18.** Verfahren nach Anspruch 13, bei dem die Schokolade einem Temperieren unterworfen wird, bevor der Schaum dazugegeben wird.

**19.** Verfahren nach Anspruch 9, bei dem das Gas aus der aus $N_2O$, $CO_2$, $N_2$, Edelgasen und Gemischen derselben bestehenden Gruppe ausgewählt wird.

**20.** Verfahren nach Anspruch 13, bei dem die Mischung aus Schokolade und Schaum abkühlen gelassen wird, bis sie sich verfestigt; die feste Schokolade dann für einen Zeitraum bei 27°C gelagert wird, wodurch die Verteilung des Wassers im Feststoff verbessert wird.

**21.** Verfahren zum innigen und homogenen Einarbeiten von Wasser oder einer Wasserlösung von wasserlöslichen Substanzen in festes lipophiles Material, das physiologisch akzeptable Fette enthält, umfassend die Schritte:

1) Schlagen einer Schaumbildner-Zusammensetzung, die mindestens einen physiologisch akzeptablen amphipatischen Schaumbildner, der mindestens eine hydrophile Gruppe und eine hydrophobe lipophile Gruppe hat, enthält, um einen Schaum mit einer Dichte von 0,2 oder weniger zu liefern, welcher aus feinen Luft- oder Gasblasen mit ausreichender Haltbarkeit besteht, die ein Vermischen des Schaums mit dem lipophilen Material ohne Zerplatzen aushalten;

2) Fluidisieren des lipophilen Materials, indem es erhitzt oder geschmolzen wird oder indem es pulverisiert wird, und kräftiges Vermischen desselben mit dem Schaum unter Bedingungen, die ausreichend mild sind, so daß die Blasen des Schaums nicht platzen;

3) Entgasen der Mischung und Stehenlassen derselben, um sie unter Kühlung festwerden zu lassen, wodurch das lipophile Material, das das Wasser und die wasserlöslichen Substanzen innig darin verteilt enthält, erhalten wird,

dadurch **gekennzeichnet,** daß

die Schaumbildner-Zusammensetzung außerdem 5 bis 30 Gew.% mindestens ein Mittel zur Viskositätserhöhung und 0,05 bis 2 Gew.% Verdickungsmittel enthält, und daß ihre Viskosität vor der Schaumbildung 5 bis 100 mPas (cP) ist.

**22.** Verfahren nach Anspruch 21, bei dem die wäßrige Schaumbildner-Zusammensetzung ein eßbares Mittel zur Viskositätserhöhung, das aus einem Di- oder Polyol mit 2 bis 25 Hydroxygruppen besteht, und ein Lebensmittelverdickungsmittel, das aus einem vernetzten Polypeptid oder Polysaccharid besteht, enthält, wobei die Viskosität dieser Zusammensetzung vor der Schaumbildung nicht weniger als 5 cP ist.

**23.** Verfahren nach Anspruch 22, bei dem der amphipatische Schaumbildner nicht-ionisch ist und aus Estern von Fettsäuren und Glykolen oder Polyglykolen mit einem HLB-Wert von etwa 15 bis 30 besteht.

**24.** Verfahren nach Anspruch 22, bei dem die wäßrige Schaumbildner-Zusammensetzung 0,05 bis 2 Gew.% Schaumbildner, 5 bis 30 Gew.% Mittel zur Viskositätserhöhung und 0,1 bis 2 Gew.% Verdickungsmittel enthält.

**25.** Verfahren nach Anspruch 22, bei dem der amphipatische Schaumbildner ein oder mehrere Fettsäureester aus gesättigten Fettsäuren, die 12 oder mehr Kohlenstoffatome haben, mit Glykolen und Polyolen, ausgewählt aus der im wesentlichen aus Erythrit, Inosit, Glycerin, oligomerem Polyglycerin mit bis zu 12 Glycerineinheiten, Sorbit, Polysorbit, Polyalkylenglykolen, Polyoxyethylenglykol und Polypropylenglykol bestehenden Gruppe, ist.

**26.** Verfahren nach Anspruch 22, bei dem das Mittel zur Viskositätserhöhung eine oder mehrere Verbindungen, die aus der aus Glykolen, Polyglykolen, Polyoxyalkylenglykolen, Glycerin, Polyglycerin, Mono-, Di- und oligosacchariden und entsprechenden Nichtzucker-Polyolen bestehenden Gruppe ausgewählt

ist (sind), ist (sind).

27. Verfahren nach Anspruch 22, bei dem das Mittel zur Viskositätserhöhung eine oder mehrere Verbindungen, die aus der aus Glucose, Fructose, Lactose, Maltose, Saccharose, Invertzucker, Rohrzucker, Galaktose, Sorbit, Mannit, Inosit, Maltit, Pentaerythrit, Stärkesirup und Melasse bestehenden Gruppe ausgewählt ist (sind), ist (sind).

28. Verfahren nach Anspruch 22, bei dem das Lebensmittel-Verdickungsmittel aus der aus Pektin, Amylopektin, Guargummi, Tragant, Araban, Xanthan, Dextrin, Maltodextrin, Gelatine und Carrageen bestehenden Gruppe, ausgewählt ist.

**Revendications**

1. Une composition acqueuse comprenant un maximum de 5 % en poids, de préférence un maximum de 2 %, d'au moins un agent foisonnant amphipatique acceptable physiologiquement comportant au moins un groupe hydrophile et un groupe hydrophobe, cette composition étant susceptible de former, par battage ou par fouettage en présence d'un gaz ou d'air, une mousse de densité inférieure ou égale à 0,2 formée de fines bulles d'air ou de gaz suffisamment stables pour ne pas éclater lorsque la mousse est mélangée avec de la matière lipophile sous forme pulvérulente ou fondue de manière que l'eau contenue dans la mousse soit distribuée dans ladite matière lipophyle avant que n'ait lieu le dégazage, caractérisée par le fait qu'elle comprend, de plus, de 5 à 30 % en poids d'au moins un adjuvant viscosant hydrosoluble, par exemple un polyol de qualité alimentaire comportant de 2 à 25 groupes hydroxyles, et de 0,05 à 2 % d'un additif épaississant constitué par au moins un polysaccharide réticulé, et par le fait que sa viscosité à température ambiante est comprise entre 5 et 100 mPas (cP).

2. La composition de la revendication 1, dans laquelle l'agent moussant est choisi parmi les esters d'acides gras saturés d'au moins 12 atomes de carbone avec des glycols et des polyols.

3. La composition de la revendication 2, dans laquelle les glycols et les polyols sont choisis essentiellement parmi l'érythritol, l'inositol, le glycérol, le polyglycérol oligomère comportant jusqu'à 12 groupes glycérol, le sorbitol, les polyalcoylènes glycols, le polyéthylène glycol, le polypropylène glycol et leurs mélanges.

4. La composition de la revendication 2, comprenant de 0,05 à 2 % en poids d'agent moussant amphipatique dont le rapport HLB hydrophile-lipophobique est de l'ordre de 15 à 30.

5. La composition de la revendication 1, dans laquelle l'adjuvant viscosant est choisi dans le groupe englobant les glycols, les polyglycols, le glycérol, le polyglycérol, les mono- et oligo-saccharides, les polyalcools et les polyols résultant de la réduction des mono- et oligo-saccharides.

6. La composition de la revendication 4, dans laquelle les oligo-saccharides et les polyols sont choisis dans le groupe englobant le glucose, le fructose, le maltose, le sucrose, le sucre inverti, le sucre de canne, le galactose, le sorbitol, le maltitol, le mannitol, l'inositol, le pentérythritol, le sirop de mais et les mélasses.

7. La composition de la revendication 1, comprenant de 0,05 à 2 % en poids d'un hydrate de carbone ou d'un épaississant protéiné alimentaire choisi parmi la pectine, l'amylopectine, la gomme guar, la gomme adragante, la dextrine, la gélatine, la gomme arabique et le carragène et autres épaississants alimentaires.

8. Un procédé pour incorporer de l'eau de façon intime et homogène dans de la matière lipophile contenant des graisses acceptables physiologiquement, dans lequel on mélange intimement ladite matière à l'état liquéfié et une mousse formée de fines bulles d'air ou d'un gaz acceptable physiologiquement, dispersé dans la composition selon la revendication 1, et dans lequel on élimine ensuite l'air ou le gaz de la matière.

9. Le procédé selon la revendication 8, dans lequel la mousse est obtenue en battant une solution acqueuse d'un agent moussant, acceptable physiologiquement, en présence d'air ou d'un gaz, ou en

dissolvant sous pression lesdits air ou gaz dans la solution, et en réduisant brusquement la pression, lesdits agents moussants présentant un pouvoir moussant suffisant pour obtenir des mousses acqueuses de densité égale à 0,2 ou moins.

**10.** Le procédé selon la revendication 9, dans lequel ledit agent moussant est un composé amphipatique d'indice HLB compris entre 15 et 30 comportant au moins un groupe hydrophile et un groupe hydrophobe lipophile, et dans lequel le groupe lipophile est en contact avec la matière lipophile de sorte que l'eau de la mousse est mélangée de façon intime à la matière lipophile au fur et à mesure que la mousse s'y dissout et que le gaz s'en échappe.

**11.** Le procédé selon la revendication 8, dans lequel la matière lipophile contient une graisse comestible et au moins un sucre sous forme d'un mono- ou d'un oligo-saccharide hydratables.

**12.** Le procédé selon la revendication 11, dans lequel ledit sucre est du sucrose, du lactose ou du glucose.

**13.** Le procédé selon la revendication 12, dans lequel ladite matière lipophile est choisie dans le groupe comprenant le chocolat, les produits de remplacement du chocolat, des crèmes cosmétiques, des produits pour farcir de la confiserie, des mélanges pour garnitures, des produits à glacer la pâtisserie, des pralinés ou similaires.

**14.** Le procédé selon la revendication 13, dans lequel la densité de la mousse est de 0,05 à 2 et sa teneur en humidité comprise entre 1 et 20 % par volume et dans lequel on ajoute environ de 0,2 à 1 partie par volume de cette mousse pour une partie de matière lipophile.

**15.** Le procédé selon la revendication 9, dans lequel la concentration de l'agent moussant dans la solution acqueuse est de 0,05 à 2 % en poids.

**16.** Le procédé selon la revendication 9, dans lequel le mélange est effectué à une température comprise entre environ 25 et 50 °C.

**17.** Le procédé selon la revendication 9, se traduisant par une élévation du point de fusion du chocolat et par un accroissement de sa résistance au "fat blooming".

**18.** Le procédé selon la revendication 13, dans lequel le chocolat est soumis à une opération de tempérage avant l'ajout de la mousse.

**19.** Le procédé selon la revendication 9, dans lequel le gaz est choisi dans le groupe englobant $N_2O$, $CO_2$, $N_2$, des gaz nobles et leurs mélanges.

**20.** Le procédé selon la revendication 13, dans lequel on laisse refroidir le mélange du chocolat et de la mousse jusqu'à solidification, puis on stocke le chocolat solidifié, pendant une certaine durée et à une température de 27 °C, la distribution de l'eau dans le solide étant ainsi améliorée.

**21.** Un procédé pour incorporer, de façon intime et homogène, de l'eau ou une solution acqueuse de substances solubles dans l'eau dans une matière lipophile solide contenant des graisses acceptables physiologiquement, comprenant les étapes suivantes :

1) en présence d'air ou d'un gaz acceptable physiologiquement, on bat ou fouette une composition moussante acqueuse englobant au moins un agent moussant amphipatique comportant au moins un groupe hydrophile et un groupe lipophile hydrophobe de manière à former une mousse de densité égale à 0,2 ou moins, consistant en de fines bulles d'air ou de gaz de durabilité suffisante pour résister sans éclater au mélange de la mousse et de la matière lipophile;

2) on fluidise la matière lipophile, par chauffage et liquéfaction ou par pulvérisation, et la mélange intimement à la mousse de manière suffisamment douce pour éviter l'éclatement des bulles de la mousse;

3) on effectue le dégazage du mélange et le laisse se solidifier en le refroidissant, de manière à obtenir ladite matière lipophile contenant l'eau et lesdites substances solubles dans l'eau distribuées intimement, caractérisée par le fait que la composition moussante comprend, de plus, de 5 à 30 % en poids d'un adjuvant viscosant et de 0,05 à 2 % en poids d'un épaississant, et par le fait que sa

viscosité avant "moussage" est de 5 à 100 mPas (cP).

**22.** Le procédé selon la revendication 21, dans lequel ledit mélange moussant acqueux englobe un agent viscosant alimentaire, consistant en un di- ou polyol présentant de 2 à 25 groupes hydroxyles, et un épaississant alimentaire consistant en un polypeptide articulé ou un poly-saccharide, la viscosité dudit mélange avant "moussage" étant au moins égale à 5 cP.

**23.** Le procédé selon la revendication 22, dans lequel ledit agent moussant amphipatique est non ionique et est constitué d'esters d'acides gras et de glycols ou poly-glycols dont le rapport hydrophile-lipophile est d'environ 15 à 30.

**24.** Le procédé selon la revendication 22, dans lequel ledit mélange moussant acqueux comprend, en poids, de 0,05 à 2 % d'adjuvant moussant, de 5 à 30 % d'adjuvant viscosant et de 0,1 à 2 % d'un épaississant.

**25.** Le procédé selon la revendication 22, dans lequel ledit adjuvant moussant amphipatique est formé par l'un ou plusieurs parmi les esters acides gras des acides gras saturés comportant 12 atomes de carbone ou plus avec des glycols et des polyols choisis dans le groupe englobant essentiellement l'érythritol, l'inositol, le glycérol, le polyglycérol oligomère comportant jusqu'à 12 unités glycérol, le sorbitol, le polysorbitol, les glycols polyalcoylène, le glycol polyoxyéthylène et le glycol polypropylène.

**26.** Le procédé selon la revendication 22, dans lequel ledit adjuvant viscosant est constitué par l'un ou par plusieurs composés choisis dans le groupe englobant les glycols, les polyglycols, les glycols polyoxyalkylènes, le glycérol, le polyglycérol, les mono-, di- et oligo-saccharides, et les polyols non sucrés correspondants.

**27.** Le procédé selon la revendication 22, dans lequel ledit adjuvant viscosant est constitué par l'un ou plusieurs composés choisis dans le groupe englobant le glucose, le fructose, le lactose, le maltose, le sucrose, le sucre inverti, le sucre de canne, le galactose, le sorbitol, le maltitol, le mannitol, l'inositol, le pentérythritol, le sirop de maïs et les mélasses.

**28.** Le procédé selon la revendication 22, dans lequel l'épaississant alimentaire est choisi dans le groupe englobant la pectine, l'amylopectine, la gomme guar, la gomme adragante, la gomme arabique, le xanthan, la dextrine, la maltodextrine, la gélatine et le carragène.